# EUROPEAN PATENT SPECIFICATION

(11) **EP 1 153 902 B1**
(45) Date of publication and mention of the grant of the patent: **10.03.2004**
(21) Application number: 01304155.3
(22) Date of filing: 09.05.2001
(51) Int. Cl.: C05F 17/02, C05F 9/04

(54) **Composting apparatus**
Kompostierungsvorrichtung
Appareil à composter

(30) Priority: 13.05.2000 GB 0011484
(43) Date of publication of application: 14.11.2001
(73) Proprietor: Webb, John, Eaton, Congleton, Cheshire CW12 2JE (GB)
(72) Inventor: Webb, John, Eaton, Congleton, Cheshire CW12 2JE (GB)
(74) Representative: Graves, Ronald

(56) References cited:
- US-A- 3 845 939
- US-A- 4 555 212
- US-A- 5 300 438
- US-A- 5 661 031
- US-A- 5 981 269
- PATENT ABSTRACTS OF JAPAN vol. 2000, no. 07, 29 September 2000 (2000-09-29) -& JP 2000 095589 A (KUBOTA CORP), 4 April 2000 (2000-04-04)
- PATENT ABSTRACTS OF JAPAN vol. 017, no. 483 (M-1472), 2 September 1993 (1993-09-02) -& JP 05 116734 A (DAIWA KENKI KK;OTHERS: 01), 14 May 1993 (1993-05-14)
- DATABASE WPI Week 199324, Derwent Publications Ltd., London, GB; Class D16, AN 1993-191222 & JP 5 116 734 A (DAIWA KENKI KK) 14 May 1993

## Description

This invention relates to composting apparatus.

The disposal of waste material is an increasing problem. In the case of garden waste, e.g. grass cuttings, weeds and the like, it is well known to put the waste in a composting container. Such a container may be a wire mesh or barrel structure of plastics material, but these do not necessarily produce the optimum conditions for bacteriological breakdown of the waste material within them. Furthermore, the material is usually put into the container in the condition in which it is produced, whereas for optimum performance the material should be shredded before being put into the container. In consequence, the disadvantage of composting in this way is the length of time required for the composting process to reach a sufficiently advanced stage for the composted material to be of use in the garden. On a larger scale, the waste disposal is in many cases effected by means of landfill sites. However, the problem with this method is the very high cost and lack of availability of sufficient land and the resulting contamination of the land that is used for such a purpose. Much of the waste that is put into a land-fill site, for example organic material such as vegetable waste, paper and wood pulp, could be composted to produce usable material for garden, horticultural and agricultural purposes if sufficient space and time could be available for the completion of the composting process. This may be many months. Another problem is that of the disposal or use of sewage/manure. With all of these methods of waste disposal, the problem is the time and space required for the bacteriological breakdown of the material to render it usable as a fertiliser. Furthermore, some combined materials, such as rubberised or resin coated paper, in respect of which separation for re-cycling purposes is impossible or impractical, may be composted to save on landfill requirements if a suitable composting process is available. Also the composting process is preferably performed in an aerated environment, since anaerobic composting gives off methane which can create further problems, and foul odours. Various methods have been proposed for reducing the time taken for the material being composted to reach a usable condition, thereby reducing the space requirements for a continuous composting process. One such method is the mixing with the composting material of a biomass of bacteria to increase the rate of breakdown of the material. Frequent tuming of the material increases its aeration, which also speeds up the breakdown of the material, as does frequent or even continuous watering. All of these methods add to the cost of the process.

US 5300438 discloses a rotary container for composting material. Rotary containers tend to lift and "dump" the composting material and therefore do not tend to aerate the material satisfactorily. This aeration and heat generation also minimises the production of foul odours and tends to eliminate pathogens such as salmonella, ecoli, foot and mouth disease, swine versicular disease and scrape.

These process characteristics cannot be achieved with rotary containers as disclosed in US 5300438, and heating of a rotary container is difficult, costly and inefficient JP 05116734 discloses a screw conveyor for conveying compost material. However, with a horizontal screw conveyor of this type the conveyed material will not be composted satisfactorily or even to any degree during that conveyance. In fact, such a screw conveyor tends to move the material en-masse and does not aerate the material.

It is an object of the present invention to provide an apparatus for composting organic material, which significantly reduces in a cost-effective manner the time taken for the bacteriological breakdown of such material.

The invention provides a composting apparatus comprising an elongate tubular container, an inlet at one end of the container for material to be composted, an outlet at the opposed end of the container for composted material, delivery means operable to move the material progressively from the inlet to the outlet, characterised by, in combination, the delivery means comprises a screw device mounted on a rotary mandrel, which extends along the container between the inlet and the outlet, the screw device comprises a plurality of blades disposed in a helical formation on the mandrel, the apparatus is tilted with the inlet end lower than the outlet end and the apparatus has a drain hole at the inlet end for drainage of excess water.

The container may have heat-insutating material disposed around the outer surface thereof. The container may also have heating means, which may comprise heat-tracing cable wound around the outer surface of the container within between the outer surface and the insulating material. The apparatus may also comprise a controller operable to control the temperature of the material within the container.

The blades may be substantially 200mm apart. The blades may extend outwardly of the mandrel at between 75° and 90° to the axis of the mandrel, preferably substantially 85°. The mandrel may have a handle attached to one end thereof. Altematively or additionally a drive motor may be connected to the mandrel. As a further alternative an hydraulic or electric ram may drive a cog arrangement attached to the mandrel. The composting apparatus may be connected to a supply of pressure air, in which case the apparatus may comprise jets that direct the air into the container. The apparatus may also comprise outlets for air from the container. The composting apparatus may also comprise a supply of water, which may direct water to the inlet end of the container.

The container may be circular in transverse cross-section. The container may be between 300mm and 3m in diameter, and may be substantially 400mm in diameter. The diameter of the screw device may be substantially 10mm less than the diameter of the container. The container may be between 1m and 4m in length and may be substantially 2m in length.

The invention also provides a method of composting waste organic material, comprising loading the material to be composted into an inlet at one end of an elongate indined container, characterised by progressively delivering the material from the inlet at the lower end of the inclined container to an outlet at the upper end thereof, shredding the material as it is delivered from the inlet end to the outlet end and draining excess water from the lower end of the container. The method may comprise restricting the heat loss from the material during the delivering thereof, and may also comprise heating the material during the delivering thereof. The delivering of the material may be effected at between 40°C and 90°C, preferably between 50°C and 60°C.

The method may comprise lifting whilst shredding. The method may comprise directing jets of air into the material during the delivering thereof. The method may also comprise directing water onto the loaded material prior to the delivering thereof. The method may comprise adding a catalyst to the material during loading thereof, and such catalyst may be chemical such as nitrogenous material and/or may be a biomass material containing bacteria, yeast, enzymes and/or fungi (protezoa). The method may comprise loading a predetermined quantity of material to be composted and adding a predetermined quantity of catalyst material thereto. The adding of catalyst material may be performed mechanically by injection or by means of at least one measuring bottle adapted to measure a predetermined quantity of catalyst material. One bottle may contain a chemical substance and a second bottle may contain a biomass material. The method may comprise inserting date indicators into the container to indicate the length of time a charge of material has been in the container.

The invention will now be further described with reference to the accompanying drawing in which:
Fig. 1 is a sectional side elevation of one embodiment,
Fig. 2 is an end view of the embodiment of Fig. 1, and
Fig. 3 is an end view of a second embodiment.

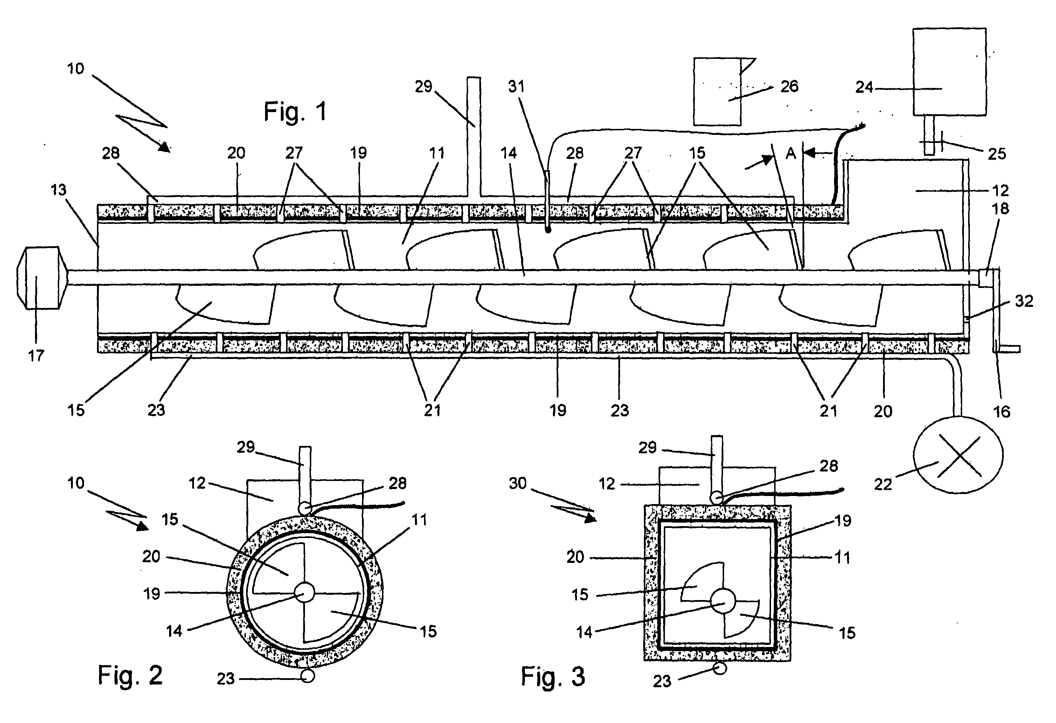

Referring now to Figs. 1 and 2, there is shown a composting apparatus 10 in the form of an elongate container 11. At one end of the container 11 is an inlet 12 for material to be composted, and at the other end of the container 11 is an outlet 13 for composted material. The container is 2m in length, and has circular transverse cross-section of 400mm diameter. Extending along the container 11 from the inlet 12 to the outlet 13 is a mandrel 14 on which are mounted blades 15. The blades 15 are disposed in a helical formation around the mandrel 14 and are 200mm apart The blades 15 form a screw device that is operable when the mandrel 14 rotates to move the material progressively from the inlet 12 to the outlet 13. The mandrel 14 may be tumed by hand using a handle 16, or by means of a motor 17. If both the motor 17 and the handle 16 are fitted, a clutch/freewheel device 18 is disposed between the mandrel 14 and the handle 16 so that the handle 16 does not rotate when the motor 17 turns the mandrel 14. The blades 15 are set at an angle A of approximately 85° to the axis of the mandrel 14. The action of the blades 15 is thereby to shred the material being composted, forward it from the inlet 12 to the outlet 13 and also to lift the material. In consequence, the material is shredded and aerated at the same time as being forwarded, thereby assisting in the bacteriological breakdown of the material.

A heat-tracing cable 19 is wound around the outer surface of the container 11, and heat insulating material 20, having a thickness of 50mm, surrounds the heat-tracing cable 19. This provides that the temperature of the material to be composted is raised to approximately 50°C to 60°C for optimum composting performance. A temperature controller 31 controls the electrical supply to the heat tracing cable 19 to maintain the temperature of the composting material to the desired level. If the insulation 20 is adequate, or if the mass of the material to be composted is sufficient, heating by means of the heat-tracing cable 19 may not be necessary. However, provision of the heat tracing cable 19 is particularly advantageous for starting the process during cold weather.

Provided to extend into the container 11 through the heat-tracing cable 19 and the insulation 20 are jets 21 through which pressured air from a source 22, for example a compressor or fan, is passed into the material being composted. A manifold 23 connects the air source 22 with the jets 21. By this means the material being composted is fully aerated during the composting process. Since a considerable amount of heat is generated by the composting process, further openings 27 provide outlets for warm air from the container 11 to a second manifold 28 from which a duct 29 may lead the warm air for heating a greenhouse or other heating purposes. Also to assist in the bacteriological breakdown of the material, providing an initial substantially anaerobic breakdown followed by the subsequent aerobic breakdown, water from a supply 24 may be added through a regulator 25 to the material to be composted as it is loaded into the inlet 12. Excess water addition at the beginning of the process will enable the pH value of the material being composted to be the optimum for accelerated anaerobic bacterial breakdown of the material during the initial part of the delivery along the container 11 and prior to the change to aerobic composting under the influence of the lifting, tuming and air injection. The container 11 is tilted a few degrees with the inlet end 12 lower than the outlet end 13, and a drain hole 32 is provided at the inlet end 12 for drainage of excess water. This allows the water in the composting material to drain back towards the inlet end 12 so that the material "dimbs" out of the wet zone as it moves towards the outlet end 13. Alternatively, or in addition, to the addition of water, a catalyst for the bacteriological breakdown of the material may be added. This may be effected by loading a predetermined quantity of material to be composted into the inlet 12 and adding a predetermined quantity of the catalyst material to it. In the embodiment shown the catalyst material is added from a measuring bottle 26 that is adapted to measure a predetermined quantity of the catalyst material. The catalyst may be a chemical substance such as a nitrogenous material, phosphorous and/or potassium, or a biomass material containing bacteria, yeast, enzymes and/or fungi (protezoa). One bottle 26 may contain the chemical substance and a second bottle 26 contain the biomass material. Alternatively the catalyst(s) may be provided by a pumped supply and added mechanically by injection. Date indicators, for example dated tape in a non-degradable bag, may be added to the material to indicate the length of time that the material has been in the container 11. The speed of the motor 17 and/or the frequency of turning of the handle 16 will control the rate at which the material is progressed along the container 11 so that the material issuing from the outlet 13 is fully composted. Alternatively, the motor 17 or the direction of turning the handle 16 may be reversed if it appears that the material in the container 11 requires more time to become fully composted. As a further alternative (not shown) an hydraulic or electric ram may drive a cog arrangement attached to the mandrel.

In Fig. 3 there is shown an alternative embodiment of composting apparatus 30 in which the parts are identical with those shown in Figs. 1 and 2 and are identified by the same reference numerals. The differences between the embodiment of Fig. 3 from that of Figs. 1 and 2 are that in the Fig. 3 embodiment, the container 11 has a rectangular cross-section instead of circular and mandrel 14 and blades 15 are disposed at the bottom of the container 11 instead of centrally thereof. In other respects the embodiments are the same and the operation of the two embodiments is the same.

By means of the invention a composting apparatus for organic materials and method of its use are provided which could reduce to requirement for expensive and increasingly scarce landfill sites. Garden waste such as grass cuttings may be composted in about three days, a considerable reduction compared with the conventional method of simply storing such waste in a wire mesh container or barrel of plastics material. The apparatus may be made large enough to accommodate sewage or agricultural waste, thereby reducing the cost of disposal of such waste. In addition, the composted material may be used as or incorporated in fertiliser, thereby reducing the material to be disposed of and recouping some if not all of the cost of composting. The heat generated may be used for heating a greenhouse or for some other useful purpose. Furthermore, to save on landfill requirements, the apparatus may be used for composting some combined materials, such as rubberised or resin coated paper, in respect of which separation for re-cycling purposes is impossible or impractical. Also the disadvantages of the emission of of foul odours from the composting material or of methane from landfill sites is avoided.

## Claims

1. A composting apparatus (10) comprising an elongate tubular container (11), an inlet (12) at one end of the container (11) for material to be composted, an outlet (13) at the opposed end of the container (11) for composted material, delivery means (14, 15) operable to move the material progressively from the inlet (12) to the outlet (13), **characterised by**, in combination, the delivery means (14, 15) comprises a screw device (15) mounted on a rotary mandrel (14), which extends along the container (11) between the inlet (12) and the outlet (13), the screw device (15) comprises a plurality of blades (15) disposed in a helical formation on the mandrel (14), the apparatus (10) is tilted with the inlet end (12) lower than the outlet end (13) and the apparatus (10) has a drain hole (32) at the inlet end (12) for drainage of excess water.

2. A composting apparatus according to claim 1, **characterised in that** the container (11) has heat-insulating material (20) disposed around the outer surface thereof.

3. A composting apparatus according to claim 1 or claim 2, **characterised by** heating means (19).

4. A composting apparatus according to any one of claims 1 to 3, **characterised in that** the mandrel (14) has a handle (16) attached to one end thereof.

5. A composting apparatus according to any one of claims 1 to 3, **characterised in that** a drive motor (17) is connected to the mandrel (14).

6. A composting apparatus according to any one of claims 1 to 5, **characterised in that** the composting apparatus (10) is connected to a supply of pressure air (22) and comprises jets (21) that direct the air into the container (11).

7. A composting apparatus according to any one of claims1 to 6, **characterised by** a supply of water (24), wherein the supply of water (24) directs water to the inlet end (12) of the container (11).

8. A composting apparatus according to any one of claims 1 to 7, **characterised in that** the container (11) is circular in transverse cross-section.

9. A method of composting waste organic material, comprising loading the material to be composted into an inlet of an elongate inclined container (11), **characterised by** progressively delivering the material from the inlet (12) at the lower end of the inclined container (11) to an outlet (13) at the upper end thereof, shredding the material as it is delivered from the inlet end (12) to the outlet end (13) and draini ng excess water from the lower end (12) of the container (11).

10. A method according to claim 9, **characterised by** restricting the heat loss from the material during the delivering thereof.

11. A method according to claim 9 or claim 10, **characterised by** heating the material during the delivering thereof.

12. A method according to any one of claims 9 to 11, **characterised by** directing jets of air (21) into the material during the delivering thereof.

13. A method according to any one of claims 9 to 12, **characterised by** directing water (24) onto the loaded material prior to the delivering thereof.

14. A method according to any one of claims 9 to 13, **characterised by** adding a catalyst (26) to the material during loading thereof.

15. A method according to any one of claims 9 to 14, **characterised by** inserting date indicators to indicate the length of time a charge of material has been in the container (11).

## Patentansprüche

1. Kompostiervorrichtung (10) mit einem länglichen, tubusförmigen Behälter (11), einem Einlass (12) am einen Ende des Behälters (10) für zu kompostierendes Material, einem Auslass (13) am gegenüberliegenden Ende des Behälters (11) für kompostiertes Material, einer Fördereinrichtung (14,15) zur progressiven Bewegung des Materials vom Einlass (12) zum Auslass (13), **dadurch gekennzeichnet, dass** in Kombination die Fördereinrichtung (14,15) eine Schraubenvorrichtung (15) aufweist, die auf einem Drehdorn (14) angebracht ist, der sich längs des Behälters (11) zwischen dem Einlasse (12) und dem Auslass (13) erstreckt, die Schraubenvorrichtung (15) mehrere Schaufeln (15) aufweist, die in einer Wendelformation auf dem Dorn (14) angeordnet sind, die Vorrichtung (10) geneigt ist, wobei das Einlassende (12) niedriger als das Auslassende (13) liegt, und die Vorrichtung (10) ein Ablassloch (32) am Einlassende (12) zum Ableiten von Überschusswasser aufweist.

2. Kompostiervorrichtung nach Anspruch 1, **dadurch gekennzeichnet, dass** der Behälter (11) mit einem wärmeisolierenden Material (20) um seine äußere Oberfläche versehen ist.

3. Kompostiervorrichtung nach Anspruch 1 oder 2, **gekennzeichnet durch** Heizeinrichtungen (19).

4. Kompostiervorrichtung nach einem der Ansprüche 1 bis 3, **dadurch gekennzeichnet, dass** der Dorn (14) eine Kurbel (16) aufweist, die an seinem einen Ende angebracht ist.

5. Kompostiervorrichtung nach einem der Ansprüche 1 bis 3, **dadurch gekennzeichnet, dass** ein Antriebsmotor (17) mit dem Dorn (14) verbunden ist.

6. Kompostiervorrichtung nach einem der Ansprüche 1 bis 5, **dadurch gekennzeichnet, dass** die Kompostiervorrichtung (10) mit einer Druckluftquelle (22) verbunden ist und Düsen (21) aufweist, die die Luft in den Behälter (11) richten.

7. Kompostiervorrichtung nach einem der Ansprüche 1 bis 6, **gekennzeichnet durch** eine Wasserquelle (24), die Wasser in das Einlassende (12) des Behälters (11) richtet.

8. Kompostiervorrichtung nach einem der Ansprüche 1 bis 7, **dadurch gekennzeichnet, dass** der Behälter (11) einen kreisförmigen Querschnitt aufweist.

9. Verfahren zum Kompostieren von organischem Abfallmaterial, umfassend: Aufgeben des zu kompostierenden Materials in einen Einlass eines länglichen, geneigten Behälters (11), **dadurch gekennzeichnet, dass** das Material vom Einlass (12) am unteren Ende des geneigten Behälters (11) progressiv zu einem Auslass (13) am oberen Ende des Behälters gefördert wird, dass Material beim Fördern vom Einlassende (12) zum Auslassende (13) geschreddert wird und Überschusswasser vom unteren Ende (12) des Behälters (11) abgezogen wird.

10. Verfahren nach Anspruch 9, **dadurch gekennzeichnet, dass** der Wärmeverlust des Materials während der Förderung desselben beschränkt wird.

11. Verfahren nach Anspruch 9 oder 10, **dadurch gekennzeichnet, dass** das Material während seiner Förderung erwärmt wird.

12. Verfahren nach einem der Ansprüche 9 bis 11, **dadurch gekennzeichnet, dass** Luftstrahlen (21) während der Förderung des Materials in dieses gerichtet werden.

13. Verfahren nach einem der Ansprüche 9 bis 12, **dadurch gekennzeichnet, dass** Wasser (24) auf das aufgegebene Material vor dem Fördern desselben gerichtet wird.

14. Verfahren nach einem der Ansprüche 9 bis 13, **gekennzeichnet durch** das Hinzufügen eines Katalysators (26) zum Material während des Aufgebens desselben.

15. Verfahren nach einem der Ansprüche 9 bis 14, gekennzeichnet das Einfügen von Datumsindikatoren zur Anzeige der Verweilzeit einer Materialscharge im Behälter (11).

## Revendications

1. Appareil de compostage (10) comprenant un récipient tubulaire allongé (11), un orifice d'entrée (12) à une extrémité du récipient (11) pour une matière à composter, un orifice de sortie (13) à l'extrémité opposée du récipient (11) pour la matière compostée, des moyens de distribution (14,15) pouvant fonctionner pour déplacer la matière progressivement depuis l'orifice d'entrée (12) à l'orifice de sortie (13), **caractérisé en ce qu'**en combinaison, les moyens de distribution (14,15) comprennent un dispositif de vis (15) monté sur un arbre rotatif (14), qui s'étend le long du récipient (11) entre l'orifice d'entrée (12) et l'orifice de sortie (13), le dispositif de vis (15) comprend une pluralité de pales (15) disposées dans une formation en hélice sur l'arbre (14), l'appareil (10) est incliné avec l'extrémité d'orifice d'entrée (12) plus basse que l'extrémité d'orifice de sortie (13) et l'appareil (10) a un orifice de vidange (32) à l'extrémité d'orifice d'entrée (12) pour vidanger l'eau en excès.

2. Appareil de compostage selon la revendication 1, **caractérisé en ce que** le récipient (11) a un matériau d'isolation thermique (20) disposé autour de la surface extérieure de celui-ci.

3. Appareil de compostage selon la revendication 1 ou 2, **caractérisé par** des moyens de chauffage (19).

4. Appareil de compostage selon l'une quelconque des revendications 1 à 3, **caractérisé en ce que** l'arbre (14) a une poignée (16) fixée à une extrémité de celui-ci.

5. Appareil de compostage selon l'une quelconque des revendications 1 à 3, **caractérisé en ce qu'**un moteur d'entraînement (17) est relié à l'arbre (14).

6. Appareil de compostage selon l'une quelconque des revendications 1 à 5, **caractérisé en ce que** l'appareil de compostage (10) est connecté a une alimentation en air comprimé (22) et comprend des gicleurs (21) qui dirigent l'air dans le récipient (11).

7. Appareil de compostage selon l'une quelconque des revendications 1 à 6, **caractérisé par** une alimentation en eau (24), dans lequel l'alimentation en eau (24) dirige l'eau vers l'extrémité d'orifice d'entrée (12) du récipient (11).

8. Appareil de compostage selon l'une quelconque des revendications 1 à 7, **caractérisé en ce que** le récipient (11) est de section transversale circulaire.

9. Procédé de compostage de déchets de matières organiques, comprenant l'étape consistant à charger le matériel à composter dans un orifice d'entrée d'un récipient incliné allongé (11), **caractérisé par** le fait de distribuer progressivement la matière depuis l'orifice d'entrée (12) vers l'extrémité inférieure du récipient (11) incliné vers un orifice de sortie (13) à l'extrémité supérieure de celui-ci, de broyer la matière quand elle est distribuée depuis l'orifice d'entrée (12) vers l'orifice de sortie (13) et de drainer l'eau en excès depuis l'extrémité inférieure (12) du récipient (11).

10. Procédé selon la revendication 9, **caractérisé par** le fait de restreindre la perte de chaleur de la matière pendant sa distribution.

11. Procédé selon la revendication 9 ou 10, **caractérisé par** le fait de chauffer la matière pendant sa distribution.

12. Procédé selon l'une quelconque des revendications 9 à 11, **caractérisé par** le fait de diriger des jets d'air (21) dans la matière pendant sa distribution.

13. Procédé selon l'une quelconque des revendications 9 à 12, **caractérisé par** le fait de diriger l'eau (24) sur la matière chargée avant la distribution de celle-ci.

14. Procédé selon l'une quelconque des revendications 9 à 13, **caractérisé par** le fait d'ajouter un catalyseur (26) à la matière pendant le chargement de celle-ci.

15. Procédé selon l'une quelconque des revendications 9 à 14, **caractérisé par** le fait d'insérer des indicateurs de date pour indiquer le temps pendant lequel la matière a été chargée dans le récipient (11).
